# EUROPEAN PATENT APPLICATION

(11) **EP 1 857 416 A2**
(43) Date of publication of application: **21.11.2007**
(21) Application number: 06023864.9
(22) Date of filing: 17.11.2006
(51) Int. Cl.: C02F 1/32

(54) **Ultraviolet fluid purification apparatus**

(30) Priority: 20.05.2006 CN 200610060841
(71) Applicant: Hikari Hight-tech Ind.(china)Ltd., Guangzhou (CN)
(72) Inventor: Wong, Tommy Chi-Kin, Kowloon Bay (HK)
(74) Representative: Haft, von Puttkamer, Berngruber

(57) **Abstract**

An ultraviolet fluid purification apparatus is to embed an ultraviolet lamp inside a tube that has an inlet pipe and an outlet pipe on the body, and the ultraviolet lamp is powered by direct current; or to embed an element that emits the ultraviolet light inside a tube that has an inlet pipe and an outlet pipe on the body. The said element is a LED ultraviolet lamp, and an acceleration structure, which comprises more than one conduit, is installed at the port of the inlet pipe. Furthermore, total transection dimensions of the conduit outlets are smaller than those of the conduit inlets. The foregoing features can assure the ultraviolet fluid purification apparatus with safe use, competitive cost and maximized purification.

## Description

### BACKGROUND OF THE INVENTION

### I. Field of the Invention

The invention relates to an ultraviolet apparatus for the purification of a fluid, especially to an ultraviolet fluid purification apparatus that utilizes both the ultraviolet light emitted by the luminescence device activated by direct current and the fluidity to process biocide and algaecide.

### II. Description of the Prior Art

According to the technology of the prior art, the ultraviolet fluid purification apparatus, especially those for the aquarium, cultivation or fountain, usually adopt a quartz cannula to accommodate an ultraviolet lamp for biocide and algaecide. The fluid in the quartz cannula must be controlled to a volume that is commensurate to total energy output from the ultraviolet lamp so as to assure effective biocide and algaecide. In view that the vacuum ultraviolet lamp is activated by alternating current, the fluid, which has electric conduction, must get close to the power source. Under certain circumstances, the apparatus can emit electric shock that endangers the users and creatures in the water. Moreover, the cannula installed in the ultraviolet liquid purification apparatus, which may have an ultraviolet lamp installed inside or outside, is usually served as a channel to control the fluid volume and consequently causes the slow running fluid that fails to completely agitate the fluid so as to have sufficient exposure to ultraviolet light. The purification effect is, therefore, quite limited. Furthermore, the fluid runs slowly in the cannula because the tangent plane where the fluid flows in the cannula is larger than the one at the entry of the cannula. The ultraviolet lamp is usually fouled by the filth in the slow running fluid and becomes less transparent; this hinders emission of ultraviolet energy. Under certain circumstances, the function of purification can fail entirely due to insufficient emission of ultraviolet energy. This is the key drawback of the forgoing ultraviolet fluid purification apparatus.

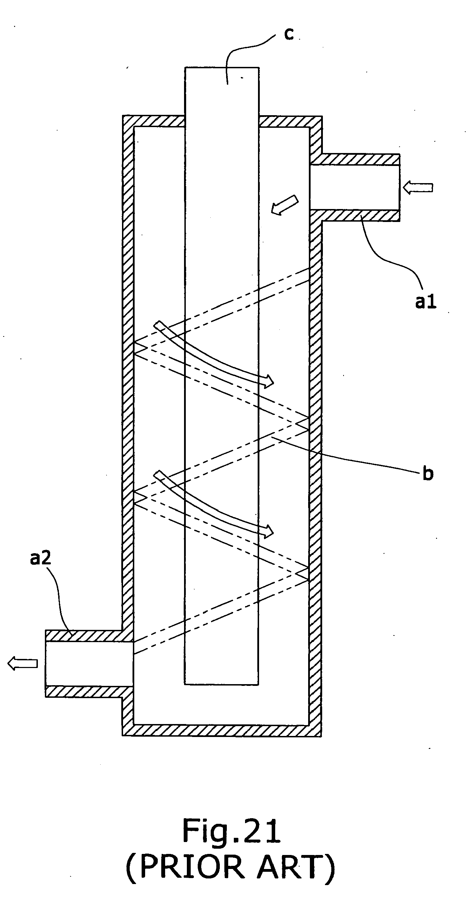

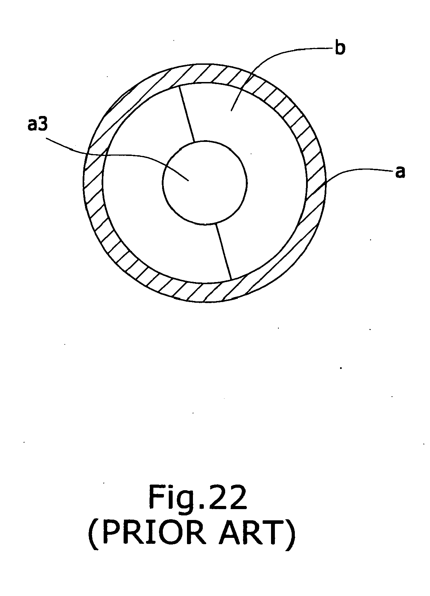

The biocide and algaecide effect depends on whether there is sufficient capacity of ultraviolet energy to remove the bacteria and algae in the fluid during a certain time period. Capacity of the ultraviolet energy is subject to thorough agitation of the fluid and transparency of the ultraviolet lamp. In other words, the biocide and algaecide effect is subject to three key elements such as the "average exposure to ultraviolet light", the "transparency of the ultraviolet lamp" and the "total lethal capacity of ultraviolet energy". However, the ultraviolet fluid purification apparatus of the prior art rarely succeeds in any of those abovementioned elements due to their structure per Fig.21 and 22: a cannula *a* that accommodates a helix *b* to guide the fluid, has an inlet pipe *a1* on top to receive the fluid and an outlet pipe *a2* on the bottom to drain the fluid; an ultraviolet lamp *c* is inserted into the cannula *a* through a hole a*3.*

With reference to US Patent No. 5069885, 5785845, 5675153, 5605400, 1175948, 1822006 and 3754658 as well as Japanese Patent Publication No. 59 150589 and Japanese Unexamined Patent Publication No. 57 75113, any cannula thereof has a helix inside to agitate the fluid so as to consist the total lethal capacity.

Nevertheless, helix *b* only guides the fluid to circulate around the ultraviolet lamp *c* without completely agitating the fluid because its length limits the fluidity and speed of the fluid. In addition, the fluid in each groove has a different volume and speed. Under the circumstances, it is hardly possible to keep the foregoing patents operating at optimum performance. Furthermore, because helix b only guides the fluid to run slowly, the filth in the slow running fluid can foul the surface of the ultraviolet lamp *c,* which makes the ultraviolet lamp c less transparent and consequently hinders the emission of ultraviolet light. Of course, the effect of the ultraviolet lamp is thus reduced. Helix *b* has a complicated shape that requires higher production cost, which makes the apparatus less competitive in the market.

Therefore, providing an ultraviolet fluid purification apparatus that avoids the foregoing drawbacks has become an unsolved technical issue.

### SUMMARY OF THE INVENTION

Objective of the present invention is to provide an ultraviolet fluid purification apparatus that features safe use, competitive costs, and maximized purification.

Objective of the present invention is materialized through providing an ultraviolet fluid purification apparatus where an ultraviolet lamp, whose external power source is direct current, is embedded in a cannula that has an inlet pipe and outlet pipe on the body.

It is also materialized through providing an ultraviolet fluid purification apparatus where an element emitting the ultraviolet light is embedded in a cannula that has an inlet pipe and outlet pipe on the body. The said element is a LED ultraviolet lamp.

It is further materialized through providing an ultraviolet fluid purification apparatus where the cannula, which has an inlet pipe and outlet pipe on the body, has more than one LED ultraviolet lamp embedded on the inner wall.

The said cannula may be a sealed cylinder or side pillar that is assembled by two or more elements. Furthermore, each element has an LED ultraviolet lamp embedded on the inner wall.

At the port of the inlet pipe on the said cannula, there is an acceleration structure, which comprises more than one conduit. In addition, total transection dimensions of the conduit outlets are smaller than those of the conduit inlets.

The said ultraviolet lamp is a cold cathode ultraviolet lamp.

Both the said cold cathode ultraviolet lamp and its attached commutator are sealed in a chase inside the cannula. A power cable is protruded from the chase so as to connect to an external power supply.

The said cannula has an indicator showing the strengths of the ultraviolet light.

A colormetric scale of various color shades is installed beside the said indicator.

The said indicator is pervious to light and contains a substance that can transfer the ultraviolet energy into visible light.

The said cannula may be a sealed cylinder or side pillar that is assembled by two or more elements. In addition, each element has an LED ultraviolet lamp embedded on the inner wall.

The technology that the present invention adopts is beyond that of the prior art: the ultraviolet fluid purification apparatus of the present invention adopts an ultraviolet lamp, which is powered by an external DC power supply or an LED ultraviolet lamp. At the port of the inlet pipe of the cannula, there is an acceleration structure, which comprises more than one conduit. In addition, total transection dimensions of the conduit outlets are smaller than those of the conduit inlets so as to assure safe use. The structure of the present invention is so simple as to reduce the costs. The said acceleration structure may accelerate swirls of the fluid to such a flow rate that the fluid can be fully agitated so as to maximize the biocide and algaecide. The apparatus can thus achieve optimal purification.

### BRIEF DESCRIPTION OF THE DRAWINGS

Fig. 1 is the diagram of an ultraviolet fluid purification apparatus- the first embodiment of the invention.
Fig. 2, 3 are the perspective views of an ultraviolet fluid purification apparatus- the first embodiment of the invention.
Fig. 4 is a three-dimensional view of the round tube of Fig. 1.
Fig. 5 is a bird's-eye view of the round tube of Fig. 1.
Fig. 6 is a perspective view of the A-A direction line of Fig. 5.
Fig. 7 is a scale-up view of section B of Fig. 6.
Fig. 8 and 9 are three-dimensional views of the adapter of Fig. 1.
Fig. 10 is a perspective view of the adapter of Fig. 9.
Fig. 11 is a three-dimensional view of the lip of Fig. 1.
Fig. 12 is a bird's-eye view of the lid of Fig. 11.
Fig. 13 is a perspective view of the C-C direction line of Fig. 12.
Fig. 14 is a three-dimensional view of the fitting of Fig. 2.
Fig. 15 is a perspective view of the fitting of Fig. 14.
Fig. 16 is a three-dimensional view of the soft plug of Fig. 2.
Fig. 17 is a perspective view of the soft plug of Fig. 16.
Fig. 18 is a three-dimensional view of the quartz tube of Fig. 1.
Fig. 19 is a perspective view of the quartz tube of Fig. 18.
Fig. 20 is the diagram of an ultraviolet fluid purification apparatus the second embodiment of the invention.
Fig. 21 is a perspective view of the ultraviolet fluid purification apparatus of a prior art.
Fig. 22 is the cross-sectional view of the ultraviolet fluid purification apparatus of Fig. 21.
Fig. 23 is the diagram of an ultraviolet fluid purification apparatus - the third embodiment of the invention.
Fig. 24 is a structural view of the A direction line of Fig. 23.
Fig. 25 is a cross-sectional view of the B-B direction line of Fig. 23.
Fig. 26 is the diagram of an ultraviolet fluid purification apparatus - the fourth embodiment of the invention.
Fig. 27 is a structural view of the A direction line of Fig. 26.
Fig. 28 is a cross-sectional view of the B-B direction line of Fig. 26.

### DESCRIPTION OF THE PREFERRED EMBODIMENT

In order that the structure, installation, and desired features of the present invention will be better understood, the preferred embodiments thereof are described in detail by way of example, with reference to the accompanying drawings.

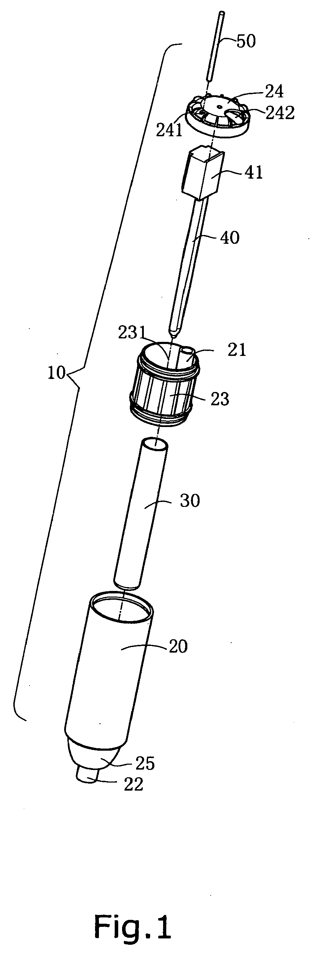

With reference to Fig. 1 to 3, which illustrate the first embodiment of the present invention, the ultraviolet fluid purification apparatus 10 comprises of a round tube 20 that has an inlet pipe 21 and an outlet pipe 22, a quartz cannula 30 that is embedded in the round tube 20 and an ultraviolet lamp 40 that is embedded in the quartz cannula 30 and powered by direct current so as to maximize safety. This embodiment is described in details as follows.

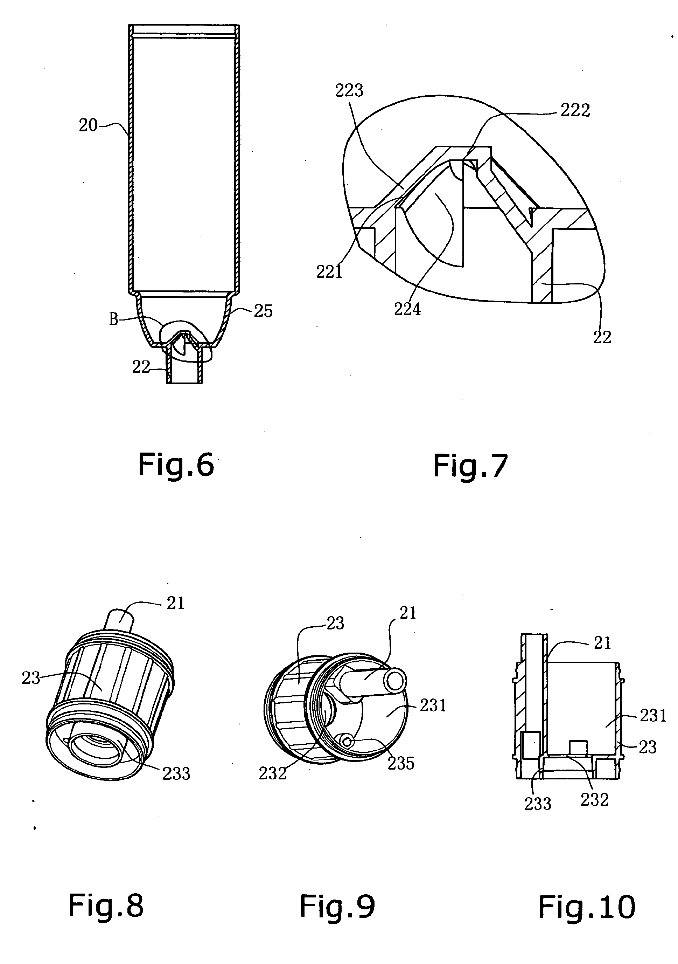

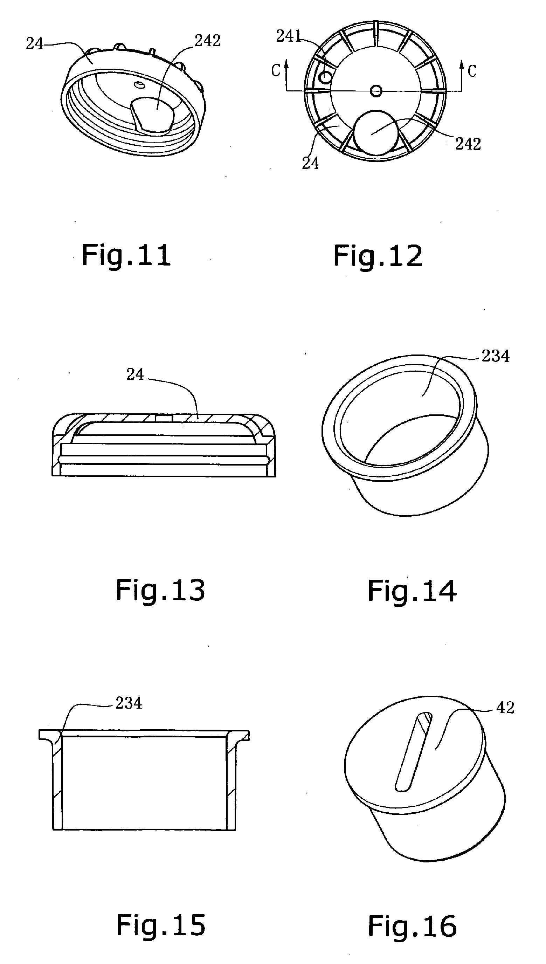

With reference to the structure of the first embodiment as described in the above and Fig. 8 to 10, the top opening of the round tube 20 can be sealed by screwing or adhering the bottom of an adapter 23, which accommodates a chase 231 with a lid 24.Fig. 11 to 13. The chase 231 is downwardly perforated in the center of its bottom to form a hole 232 and protrudent wall 233, and has an inlet pipe 21 built against its inner wall. The inlet pipe 21 protrudes into the round tube 20 so as to inject the water into the round tube 20 and it is perforated into a hole 242 on the top lid 24 so as to receive the water to be purified.

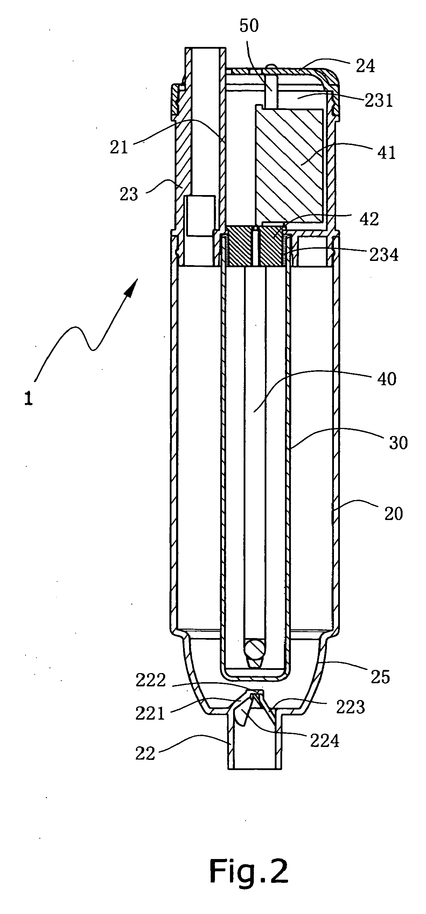

With reference to Fig. 2, 3, 18 and 19, the quartz cannula 30 is placed into the round tube 20 in a parallel direction with spaced distance so as to allow the fluid to pass through. The said quartz cannula 30 is sealed on the bottom and open on the top so as to accommodate the ultraviolet lamp 40. The top opening of the said quartz cannula 30 has a fitting 234 and can be locked into a protrudent wall 233 on the bottom of the chase 231.

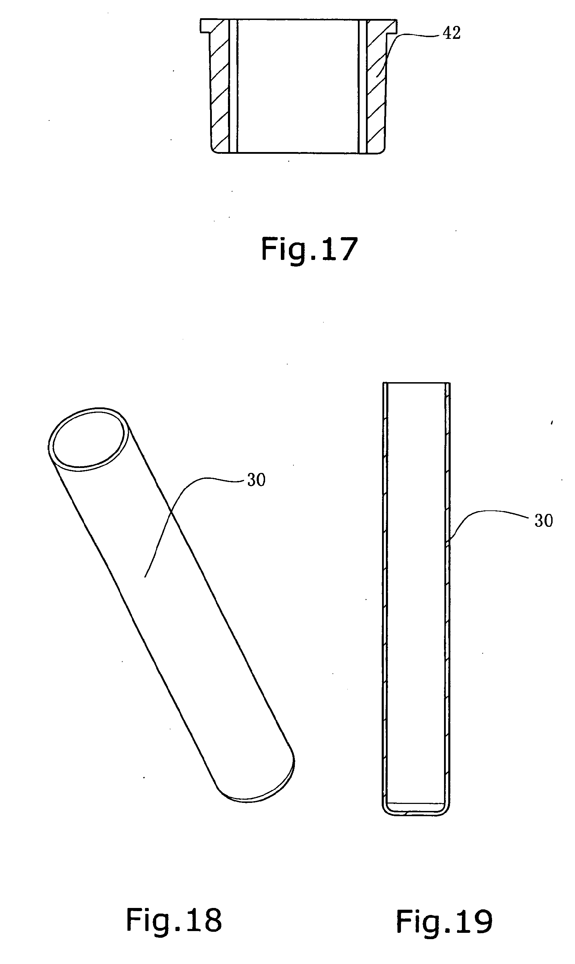

As illustrated in Fig. 1 to 3, the ultraviolet lamp 40 is inserted into the quartz cannula 30 and its top is connected to a commutator 41 that powers the ultraviolet lamp. The cold cathode ultraviolet lamp would be an optimal choice for the embodiment. A sealed element 42 Fig. 16 and 17 is installed between the commutator 41 and the ultraviolet lamp 40 so as to fasten connection of the two. The commutator 41 is sealed in the chase 231 that is embedded in the adapter 23 and sealed by glue so as to be watertight.

The commutator 41 supplies direct current to the ultraviolet lamp 40 through an external power source that maximizes safety.

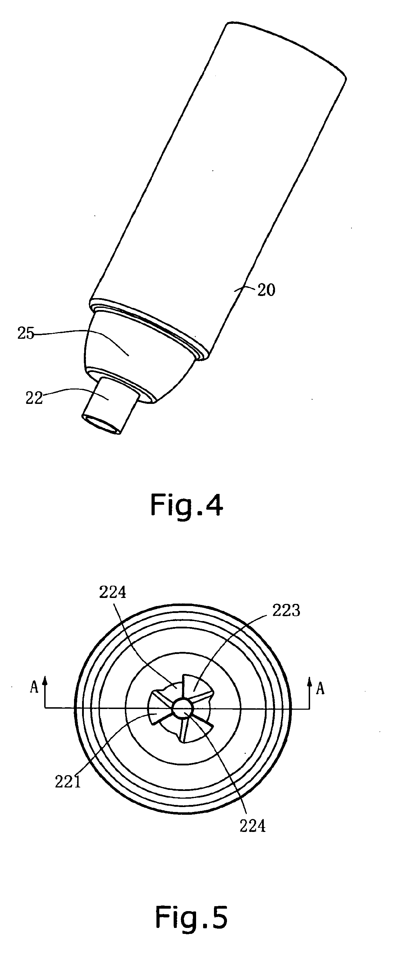

As illustrated in Fig. 1 to 7, a pipefitting 25 is installed between the bottom of the round tube 20 and the top of the outlet pipe 22, which is located on the bottom of the round tube 20. The belly of the pipefitting 25 is helpful to the drainage of the outlet pipe 22. In addition, an acceleration structure 221 is available inside the outlet pipe 22. It comprises of a top 222, which leans against the round tube 20 and is hung inside the pipefitting 25, and three vanes 223, which tilt between the top 222 and the walls of the outlet pipe 22. The vanes 223 form a ventilator by twining round the outlet pipe 25 in a clockwise fashion and from the top down. A conduit 224 is formed between the adjacent vanes 223. In adidtion, total transection dimensions of outlet at the conduit 224 are smaller than those of inlet pipe 21 that can form swirls of high flow rate so as to fully agitate the fluid. The more the fluid is agitated, the more the bacteria and algae can be removed and the less the surface of the quartz cannula 30 or LED ultraviolet 40 (details per following description) can be tainted. Under the circumstances, a lethal capacity of ultraviolet energy is emitted so as to achieve the optimum purification.

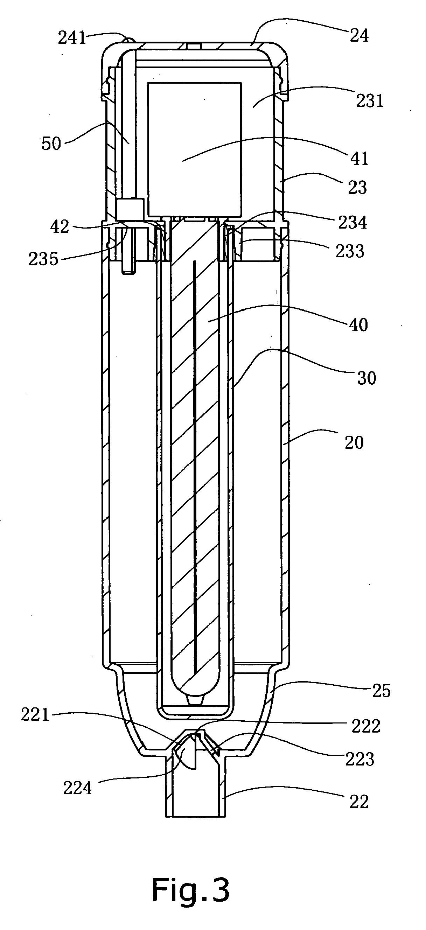

As illustrated in Fig. 1 to 3, an indicator 50 indicating the strengths of the ultraviolet light is embedded in the round tube 20 by respectively inserting its two ends into the first hole 241 (Fig.3 and 12) at the lid 24 of the round tube 20 and the second hole 235 on the bottom of the adapter 23. One end of the indicator that is protruding out of the lid 24 has a colormetric scale of various color shades installed beside it for the user to identify the strength of the ultraviolet light. The colormetric scale is made of material pervious to light and contains substances such as fluorescent powder that can transfer the ultraviolet light into visible light.

After installation of the foregoing indicator 50, quartz cannula 30, ultraviolet lamp 40, and commutator 41, the chase 231 accommodated in the adapter 23 shall be sealed by glue to be watertight.

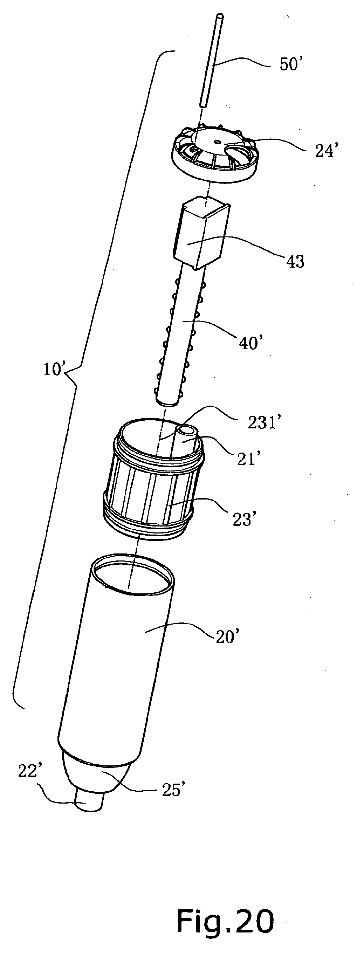

The second embodiment of the present invention is illustrated in Fig. 20, wherein the ultraviolet fluid purification apparatus 10' comprises a round tube 20', an adaptor 23', a lid 24', a pipefitting 25', an indicator 50', an inlet pipe 21' and an outlet pipe 22' that are identical to those of the first embodiment in terms of structure and constitution. The second embodiment is only distinct from the first embodiment by an LED ultraviolet lamp 40' that is directly inserted into the round tube 20' and controlled by a control board 43 that is connected to an external power source. After installation of the foregoing indicator 50', LED ultraviolet lamp 40' and control board 43, the chase 231' accommodated in the adapter 23' shall be sealed by glue to be watertight.

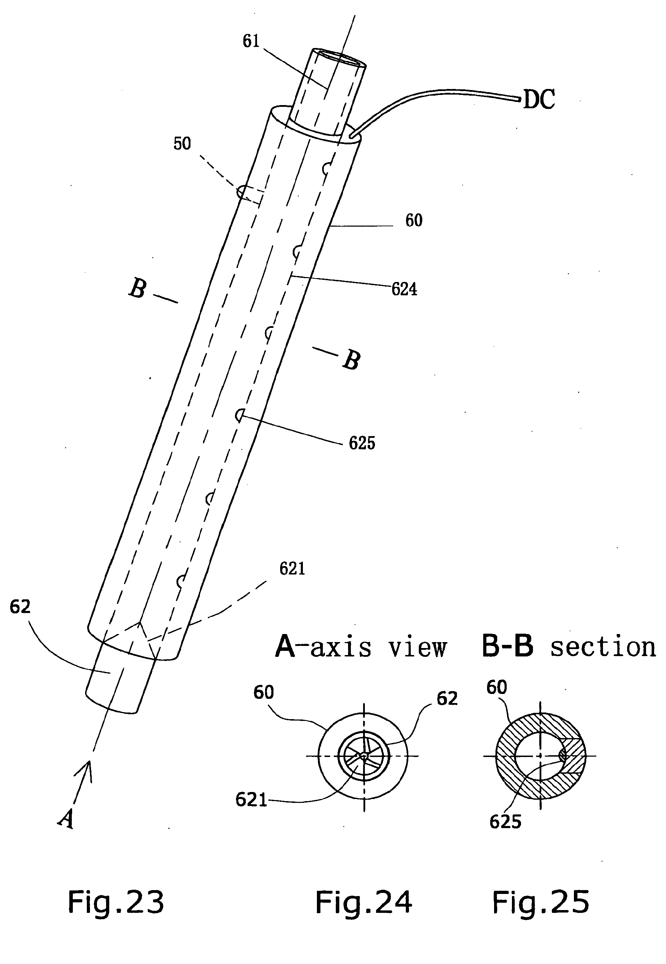

The third embodiment of the present invention is illustrated in Fig. 23 to 25, wherein the round tube 60 can accommodate an LED ultraviolet lamp 625 and has an outlet pipe 62 on the bottom and an inlet pipe 62 on top that comprises an acceleration structure 621. No further descriptions of the acceleration structure 621 are made hereby as its structure is identical to that of the acceleration structure 221. A conduit 624 is formed in the acceleration structure 621. And, total transection dimensions of outlet at the conduit 624 are smaller than those of inlet pipe 61 that can form swirls of high flow rate so as to fully agitate the fluid. The more the fluid is agitated, the more the bacteria and algae can be removed and the less the surface of the LED ultraviolet 40 can be tainted. Under the circumstances, a lethal capacity of ultraviolet energy is emitted so as to achieve the optimum purification. In addition, an indicator 50 is installed for the user to identify the strengths of the ultraviolet light.

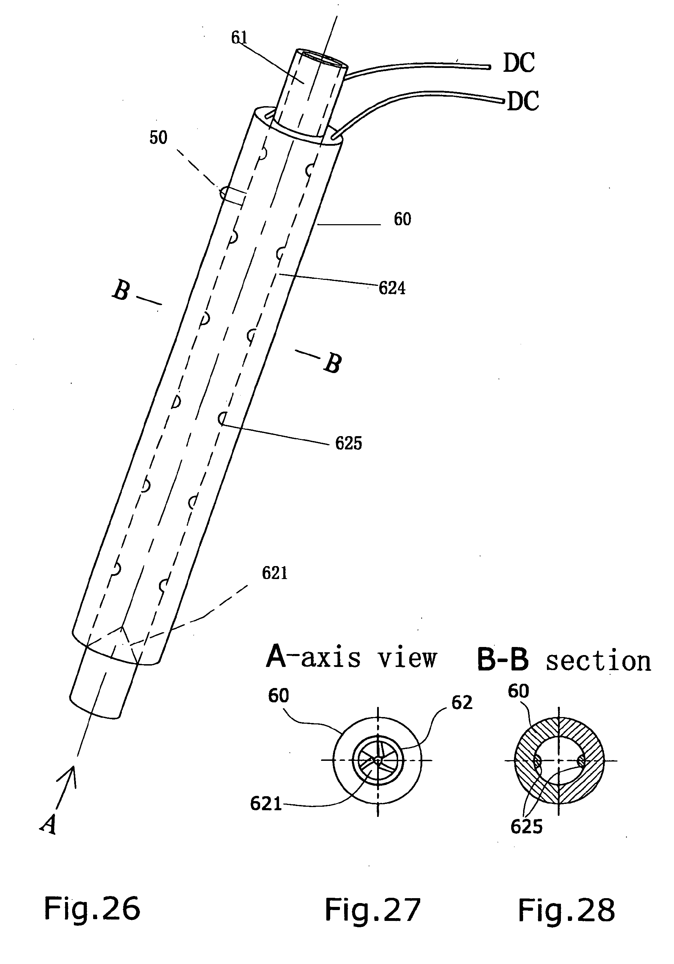

The fourth embodiment of the present invention is illustrated in Fig. 26, 27 and 28, wherein the structure is identical to that of the third embodiment illustrated in Fig. 23, 24, 25 except the LED ultraviolet lamp 625 which is in two rolls. However, effect of the fourth embodiment is also identical to that of the third embodiment. Therefore, no description of the fourth embodiment is made hereby.

It will be appreciated that the above description relates to the preferred embodiment by way of example only. Many variations on the invention will be obvious to those knowledgeable in the field, and such obvious variations are within the scope of the present invention as described and claimed, whether or not expressly described.

To sum up, the "ultraviolet fluid purification apparatus" of the present invention has the advantages of safe use, competitive cost and maximized purification so as to possess the "practicability" and the "advancement " in the industry field. In view the structure of the present invention has never been disclosed in any publication or for any application, the present invention conforms to the requirements of new utility model. The document is therefore submitted for patent registration pursuant to the Patent Act.

## Claims

1. An ultraviolet fluid purification apparatus is to embed an ultraviolet lamp inside a tube that has an inlet pipe and an outlet pipe on the body, the characteristic lies in: the power source of the ultraviolet lamp is direct current.

2. An ultraviolet fluid purification apparatus is to embed an element that emits the ultraviolet light inside a tube that has an inlet pipe and an outlet pipe on the body, the characteristic lies in: the said ultraviolet element is a LED ultraviolet lamp.

3. An ultraviolet fluid purification apparatus is to embed an ultraviolet lamp inside a tube that has an inlet pipe and an outlet pipe on the body, the characteristic lies in: more than one LED ultraviolet lamp is embedded on the walls of the said tube.

4. The ultraviolet fluid purification apparatus of claim 1 or 2 or 3, the characteristic lies in: an acceleration structure, which has more than one conduit, is installed on the inlet pipe. And, total transection dimensions of the conduit outlets are smaller than those of inlet pipe.

5. The ultraviolet fluid purification apparatus of claim 1, the characteristic lies in: the said ultraviolet lamp is cold cathode ultraviolet lamp.

6. The ultraviolet fluid purification apparatus of claim 5, the characteristic lies in: the said cold cathode ultraviolet lamp and its attached commutator are sealed in a chase where the power cable is protruded to connect the commutator to an external power supply.

7. The ultraviolet fluid purification apparatus of claim 1 or 2 or 3, the characteristic lies in: the said tube has an indicator that indicates the strengths of the ultraviolet light.

8. The ultraviolet fluid purification apparatus of claim 7, the characteristic lies in: a colormetric scale of various color shades are installed beside the said indicator.

9. The ultraviolet fluid purification apparatus of claim 7, the characteristic lies in: the said indicator is made of material pervious to light and contains the substance that can transfer the ultraviolet energy into visible light.

10. The ultraviolet fluid purification apparatus of claim 1 or 2 or 3, the characteristic lies in: the said tube is a sealed cylinder or side pillar that is assembled by two or more than two elements, which has a LED ultraviolet lamp embedded on the inner wall.
